# EUROPEAN PATENT SPECIFICATION

(11) **EP 1 981 355 B1**
(45) Date of publication and mention of the grant of the patent: **14.03.2018**
(21) Application number: 07717361.5
(22) Date of filing: 23.01.2007
(51) Int. Cl.: A23K 10/30, A23K 20/10, A23K 20/163, A23K 50/40

(54) **METHODS FOR REDUCING FOOD INTAKE AND CONTROLLING THE WEIGHT OF ANIMALS**
VERFAHREN ZUR VERRINGERUNG DER FUTTERAUFNAHME UND ZUR GEWICHTSKONTROLLE BEI TIEREN
PROCÉDÉS VISANT À DIMINUER LA QUANTITÉ DE NOURRITURE INGÉRÉE ET A RÉGULER LE POIDS DES ANIMAUX

(30) Priority: 23.01.2006 US 761301 P
(43) Date of publication of application: 22.10.2008
(73) Proprietor: Hill's Pet Nutrition, Inc., Topeka, KS 66603 (US)
(72) Inventor: YAMKA, Ryan, Michael, Succasunna, New Jersey 07876 (US); FRIESEN, Kim, Gene, Carthage, Indiana 46115 (US); SCHOENHERR, William, David, Hoyt, KS 66440 (US); KATS, Lauren, Jay, Topeka, KS 66614 (US)
(74) Representative: Wichmann, Hendrik
(86) International application number: PCT/US2007/060882
(87) International publication number: WO 2007/087517

(56) References cited:
- EP-A- 1 323 355
- EP-A- 1 410 722
- WO-A-02/076235
- WO-A-2005/053422
- US-A1- 2002 197 275
- US-B1- 6 248 390
- BURKHOLDER W J ET AL: "TIMELY TOPICS IN NUTRITION. FOODS AND TECHNIQUES FOR MANAGING OBESITY IN COMPANION ANIMALS" JOURNAL OF THE AMERICAN VETERINARY MEDICAL ASSOCIATION, vol. 212, no. 5, 1988, pages 658-662, XP000866318 ISSN: 0003-1488

## Description

This application claims benefit of U.S, Provisional No. 60/761,301 filed January 23, 2006.

### BACKGROUND OF THE INVENTION

### Field of the Invention

This invention relates generally to methods for feeding animals and particularly to methods for reducing food intake by animals and controlling the weight of animals.

### Description of the Related Art

Animals considered overweight and/or obese have increased in number such that it is now estimated that, in the U.S., between 25% and 40% of companion animals are considered overweight or obese. An animal is considered overweight if it weighs more than 10% above its ideal body weight, and obese if it weighs more than 15% above its ideal body weight. An animal has an ideal body weight if the animal's ribs can be felt, but not seen. Obesity in animals is implicated in increased risk of diabetes mellitus. arthritis, pancreatitis, hepatic lipidosis, orthopedic disorders, cardiovascular disease, respiratory ailments, hip dysplasia, liver disease, gastrointestinal disorders, and skin problems.

Animals such as canines and felines have been the subjects of numerous dieting schemes and exercise regimens ultimately ineffective in controlling body weight. Advances have been made in development of reduced calorie animal foods, low fat animal foods, increased nonsoluble fiber animal foods, low carbohydrate/high protein animal foods, and other foods marketed for weight control. Still, statistics indicate that as a whole, opportunities for improvement remain and further advances in the art are needed. There is, therefore, a need for new methods for reducing food intake by and controlling the weight of animals.

WO02/076235 discloses pet food compositions comprising a source of protein, a source of fat, and a source of carbohydrates from a grain source that excludes rice for use in limiting weight gain in cats.

EP1410722 discloses a weight loss kit containing a first, a second and a third packaged edible composition, wherein the first edible composition contains caffeine, the second edible composition contains proteins, and carbohydrates, and the third edible composition contains an appetite reducing ingredient.

WO2005/053422 discloses a method for reducing odour of excreta of a companion animal. The method comprises causing the animal to ingest a composition comprising an excreta odour reducing effective amount of a zingiberaceous spice such as ginger or an extract thereof, or an excreta odour reducing effective amount of fiber together with another odour reducing agent. US2002/0197275 discloses a composition for reducing food intake by dogs (by increasing the levels of GLP-1 in the gastrointestinal tract) comprising beet pulp, gum arabic and fructo-oligosaccharides as soluble fibers.

EP 1323255 discloses food products with high viscosity comprising 0.5-5% of a viscous soluble fiber, 2-20% oat bran concentrate and 7-35% cereal bran.

US6248390 discloses a dog food that can be obtained by adding a solvent containing soluble fibers to an animal food product.

### SUMMARY OF THE INVENTION

The invention provides soluble fibre for use according to claim 1.

Additional or alternative advantages and benefits of the food of the present disclosure will be apparent to one skilled in the art from reading this specification.

### DETAILED DESCRIPTION OF THE INVENTION

The present invention provides soluble fiber for use according to claim 1.

The term "soluble fiber" means one or more fibers that are readily fermented in the large intestine, e.g., beet pulp, guar gum, chicory root, psyllium, pectin, blueberry, cranberry, squash, apples, oats, beans, citrus, barley, or peas.

Food intake reduction or control of an animal's weight due to feeding a composition comprising soluble fiber is by comparison with an otherwise similar composition that does not contain soluble fiber.

The phrase "reducing food intake" with respect to a factor means a reduction in the amount of food consumed relative to the amount of food consumed in the absence of that factor. A "food intake reducing amount" of soluble fiber is an amount of soluble fiber that, when consumed by an animal, is associated with a reduction in amount of food consumed.

The ability to control the weight of an animal by feeding to the animal a composition comprising a weight controlling amount of soluble fiber is relative to feeding an otherwise similar composition lacking only the weight controlling amount of soluble fiber. A "weight controlling amount" of soluble fiber is an amount of soluble fiber that, when consumed by an animal, is associated with improved weight control. In one embodiment, improved weight control allows an animal's ideal weight to be achieved over time.

Described herein is a method for reducing food intake by an animal comprising adding to the composition a food intake reducing amount of soluble fiber. In one embodiment, the method comprises adding soluble fiber to a composition in an amount of at least about 0.3%, preferably at least about 1%, by weight on a dry matter basis. Also provided is a method for controlling the weight of an animal by adding to the composition a weight controlling amount of soluble fiber. In one embodiment, the method comprises adding soluble fiber to a composition in an amount of at least about 0.3%, preferably at least about 1%, by weight on a dry matter basis.

The soluble fiber should be present in an amount that is not toxic or otherwise deleterious to the health of an animal consuming a normal quantity of the composition. In particular, the soluble fiber should be present at a concentration that does not cause undesirable effects on digestion, particularly long term effects lasting several days or longer. Undesirable effects on digestion can include constipation, poor stool quality, or diarrhea.

Suitable amounts of a soluble fiber useful for reducing food intake by an animal or controlling the weight of an animal are in a range of from about 0.3% to about 7%, preferably from about 0.5% to about 6%, more preferably from about 0.5% to about 3%, all by weight of the composition as measured on a dry matter basis.

The methods are useful for human or non-human animals. In various embodiments the animal is a vertebrate, for example, a fish, bird, reptile, or mammal. Animals can include humans, non-human animals such as non-human primates (e.g., monkeys, chimpanzees, etc.), companion animals (e.g., canine, feline, equine, etc.), livestock (e.g., porcine, ovine, bovine, caprine, etc.), laboratory animals (e.g., murine, rats, etc.), avian (e.g., domestic birds such as canaries, parrots, etc., commercial birds such as chickens, ducks, geese, turkeys, etc., and wild birds), rodents (e.g., murine, hamsters, guinea pigs, gerbils, rabbits, hedgehogs, ferrets, chinchillas, etc.) and wild, exotic and zoo animals (e.g., wolves, bears, cervine, piscine, etc.). Particularly among mammals, the animal can be a member of the order Carnivora, including without limitation canine and feline species.

The methods are useful for animals of any age, breed, and occupation, including adult animals, senior and geriatric animals, overweight animals, obese animals, and animals having a tendency toward obesity.

In a particular embodiment, the animal is a companion animal. A "companion animal" is an animal of any species kept by a caregiver as a pet or any animal of a variety of species that have been widely domesticated as pets, including dogs (Canis familiaris) and cats (Felis domesticus), whether or not the individual animal is kept solely or partly for companionship. Thus, companion animals includes working dogs, farm cats kept for rodent control, pet cats, pet dogs, ferrets, birds, reptiles, rabbits, and fish.

Compositions useful herein include foods, supplements, treats, and toys such as chewable and consumable toys. Some, but not all, supplements, treats, and toys are themselves foods. In some embodiments, the composition is nutritionally and/or organoleptically adapted for consumption by an animal of the order Carnivora. In other embodiments where the animal is a companion animal, the composition is nutritionally adapted for feeding to such an animal. A composition so adapted is referred to herein as a "pet food."

The composition is a food that comprises the following:
(a) at least 0.3% soluble fiber and from 1% to 20% dietary insoluble fiber; and
(b) at least one of the following:
   (i) from 5% to 70% (or from 10% to 70%, or from 10% to 60%) protein, and
   (ii) from 2% to 50% (or from 5% to 50%, or from 5% to 40%) fat.

In such an embodiment, the composition optionally further comprises at least one of the following:
(a) no greater than about 50% (or from about 5% to about 45%) carbohydrate,
(b) no greater than about 40% (or from about 1% to about 20%, or from about 1% to about 5.5%) dietary insoluble fiber, and
(c) no greater than about 15% (or no greater than about 10%, or from about 2% to about 8%) of one or more nutritional balancing agents known by those of skill in the art (e.g., fish oils, cereal grains, vitamins, minerals, etc.).

Specific suitable amounts for each component in a composition will depend on a variety of factors including, for example, the species of animal consuming the composition; the particular components included in the composition; the age, weight, general health, sex, and diet of the animal; the animal's consumption rate; and the like. Thus, the component amounts may vary widely, and may even deviate from the proportions set forth in this disclosure.

Protein, if present in a composition of the disclosure, may be supplied by any of a variety of sources, including plant sources, animal sources, or both. Animal sources include, for example, meat, meat by-products, seafood, dairy, eggs, etc. Meats include, for example, the flesh of poultry; fish; and mammals (e.g., cattle, pigs, sheep, goats, and the like). Meat by-products include, for example, lungs, kidneys, brain, livers, and stomachs and intestines (freed of all or essentially all their contents). The protein can be intact, almost completely hydrolyzed, or partially hydrolyzed.

Fat, if present in a composition of the disclosure, can be supplied by any of a variety of sources, including meat, meat by-products, fish oil, and plants. Plant fat sources include wheat, flaxseed, rye, barley, rice, sorghum, corn, oats, millet, wheat germ, corn germ, soybeans, peanuts, and cottonseed, as well as oils derived from these and other plant fat sources.

Carbohydrate, if present in a composition of the disclosure, may be supplied by any of a variety of sources, including oat fiber, cellulose, peanut hulls, beet pulp, parboiled rice, corn starch, corn gluten meal, and any combination of those sources. Grains supplying carbohydrate include, but are not limited to, wheat, corn, barley, and rice.

Insoluble fiber may be supplied by any of a variety of sources, including cellulose, whole wheat products, wheat oat, corn bran, flax seed, grapes, celery, green beans, cauliflower, potato skins, fruit skins, vegetable skins, peanut hulls, and soy fiber.

In instances when the composition is an animal's food, vitamins and minerals can be included in amounts required to avoid deficiency and maintain health. These amounts are readily available in the art. The Association of American Feed Control Officials (AAFCO) provides recommended amounts of such ingredients for dogs and cats. See Association of American Feed Control Officials. Official Publication, pp. 126-140 (2003). Vitamins useful as food additives include, e.g., vitamin A, vitamin B₁, vitamin B₂, vitamin B₆, vitamin B₁₂, vitamin C,vitamin D, vitamin E, vitamin H (biotin), vitamin K, folic acid, inositol, niacin, and pantothenic acid. Minerals and trace elements useful as food additives include calcium, phosphorus, sodium, potassium, magnesium, copper, zinc, choline, and iron salts.

The compositions of the present disclosure may further contain additives known in the art. Such additives should be present in amounts that do not impair the purpose and effect provided by the invention. Examples of additives include substances with a stabilizing effect, organoleptic substances, processing aids, and substances that provide nutritional benefits.

Stabilizing substances may increase the shelf life of the composition. Suitable examples can include preservatives, antioxidants, synergists and sequestrants. packaging gases, stabilizers, emulsifiers. thickeners, gelling agents, and humectants. Examples of emulsifiers and/or thickening agents include gelatin, cellulose ethers, starch, starch esters, starch ethers, and modified starches.

Additives for coloring, palatability, and nutritional purposes can include colorants, salts (including but not limited to sodium chloride, potassium citrate, potassium chloride, and other edible salts), vitamins, minerals, and flavoring. The amount of such additives in a composition typically is up to about 5% by weight (on a dry matter basis of the composition). Other additives can include antioxidants, omega-3 fatty acids, omega-6 fatty acids, glucosamine, chondroitin sulfate, vegetable extracts, herbal extracts, etc.

In one embodiment, the composition is a nutritional supplement comprising soluble fiber as defined herein. A supplement can be a food used with another food to improve the nutritive balance or performance of the total. Supplements include compositions that are fed undiluted as an addition to other foods, offered free choice with other parts of an animal's ration that are separately available, or diluted and mixed with an animal's regular feed to produce a complete food. Supplements may be in various forms including, for example, treats, kibbles, powders, liquids, syrups, pills, encapsulated compositions, etc.

In another embodiment, the composition is a treat comprising the soluble fiber. Treats include, for example, compositions that are given to an animal to eat during a non-meal time. Treats include, without limitation, dog bones, dog biscuits, cat treats, etc. Treats may be nutritional, wherein the composition comprises one or more nutrients, and may, for example, have a composition as described above for food. Non-nutritional treats encompass any other treats that are non-toxic.

In a further embodiment, the composition is a toy comprising the soluble fiber. Toys include play toys and chew toys. Toys for dogs include balls and artificial bones. The soluble fiber can form a coating on the surface of the toy or on the surface of a component of the toy, be incorporated partially or fully throughout the toy, or both. In one embodiment, the soluble fiber is orally accessible by the intended user. There are a wide range of suitable toys currently marketed. Toys useful according to this invention include both partially consumable toys (e.g., toys comprising plastic components) and fully consumable toys (e.g., rawhides and various artificial bones), toys for both human and non-human use, toys for companion, farm, and zoo animal use, and toys particularly for dog, cat, or bird use.

In preparing a composition of the present disclosure, the components of the composition are adjusted so that the soluble fiber is present in the composition in the desired amount, e.g., about 0.3% to about 7% on a dry matter basis. The soluble fiber can be distributed more or less homogeneously throughout the composition. The soluble fiber may be incorporated into the composition during processing of the formulation, such as during and/or after mixing of other components of the composition. Distribution of these components into the composition can be accomplished by conventional methods including standard mixing procedures. Alternatively, the soluble fiber can be present in whole or in part on surfaces of food pieces such as meat chunks, dry kibbles, or individual treats such as dog biscuits.

Compositions of the present disclosure (particularly foods) can be prepared in a dry form, for example using conventional processes. In one embodiment, dry ingredients, including animal protein sources, plant protein sources, grains, etc. are ground and mixed together. Moist or liquid ingredients, including fats, oils, animal protein sources, water, etc. are blended into the dry ingredients. The soluble fiber can be included as a dry ingredient or included as a moist or liquid ingredient, depending on the source of the soluble fiber. The resulting mixture can then be processed into kibbles or similar dry pieces. Kibble can be formed using an extrusion process in which the mixture of dry and wet ingredients is subjected to mechanical work at a high pressure and temperature, and forced through small openings and cut off into kibble by a rotating knife. The wet kibble is then dried and optionally coated with one or more topical coatings which may include, for example, flavors, fats, oils, powders, and the like. Kibble also can be made from the dough using a baking process, rather than extrusion, where the dough is placed into a mold before dry heat processing.

Compositions of the present disclosure (particularly foods) can be prepared in a canned or wet form, for example using conventional pet food processes. In one embodiment, ground animal (e.g., mammal, poultry, seafood, and/or fish) proteinaceous tissues are mixed with the other ingredients, including fish oils, cereal grains, other nutritionally balancing ingredients, and special purpose additives (e.g., vitamin and mineral mixtures, inorganic salts, cellulose and beet pulp, bulking agents, and the like). Water sufficient for processing may also be added. The wet form ingredients can be mixed in a vessel suitable for heating while blending the components. Heating of the mixture may be effected using any suitable manner, such as, for example, by direct steam injection or by using a vessel fitted with a heat exchanger. Following addition of the last ingredient, the mixture is heated to a temperature of about 10°C to about 100°C (50°F to about 212°F. Temperatures outside this range are acceptable, but may be commercially impractical without use of other processing aids. When heated to an appropriate temperature, the material will typically be in the form of a thick liquid. The thick liquid is filled into cans. A lid is applied, and the container is hermetically sealed. The sealed can is then placed into conventional equipment designed to sterilize the contents. This is usually accomplished by heating to temperatures of greater than about 110°C (about 230°F) and for a time appropriate for the temperature used and the composition.

The soluble fiber can be incorporated into the wet food composition or mixed into the dry materials prior to forming the wet food composition.

Treats can be prepared by an extrusion or baking process similar to those described above for dry food. Other processes also may be used to either coat the soluble fiber on the exterior of existing treat forms, or inject it into an existing treat form.

The soluble fiber can be added during manufacturing of the composition, as indicated above, by a process of mixing or coating. In another embodiment, the soluble fiber is added to an animal's food by the person responsible for feeding the animal.

For this purpose, it is more convenient, and reduces risk of accidental over addition of the soluble fiber, to provide the soluble fiber in diluted or dispersed form in a suitable carrier such as vegetable oil or edible powder. A powder comprising the soluble fiber can be sprinkled on an animal's food immediately before feeding. Alternatively, a liquid comprising the soluble fiber can be drizzled or sprayed on the food. Such powder or liquid compositions are described herein as "fiber containing compositions." They can be applied to the top of a serving of food and/or can be mixed into the food. The use of such fiber containing compositions to reduce food intake and/or control weight is an embodiment of the present invention.

A fiber containing composition as described above can be purchased independently of the food to which it is to be added; alternatively, such a composition or seasoning can be purchased together with the food in the form of a kit, for example a co-packaged kit. Such a kit can further include a label or package insert providing guidance or instructions as to suitable amounts of the fiber containing composition to be added to the food.

A food intake reducing amount and/or a weight controlling amount of the soluble fiber will generally be found in a range as provided herein, e.g., from about 0.3% to about 7%, from about 0.5% to about 6%, from about 0.5% to about 3%, by weight of the composition on a dry matter basis to which the soluble fiber is to be added.

Described herein is an article of manufacture comprises a package containing a composition comprising an intake reducing amount and/or a weight controlling amount of the soluble fiber as described herein. Any form of package appropriate to the nature of the composition can be used, including without limitation, a can, a jar, a pouch, a bag, a tube, a bag in a box, etc. The article of this embodiment further comprises a means for communicating information about or instructions for feeding the composition to an animal. The communicating means can be attached to or enclosed in the package. Any suitable form of communicating means can be employed, for example, a document such as a label, brochure, advertisement or package insert, a computer readable digital or optical medium such as a diskette or CD, an audio presentation, for example, on an audiotape or CD, or a visual presentation, for example on a videotape or DVD. The communicating means can refer to further information located elsewhere, such as on a website.

The method of the present disclosure will be found especially beneficial in cases where the animal is, or has become, overweight or obese, or is rapidly gaining weight.

The present disclosure also provides the use of the compositions of the present disclosure for controlling the weight of an animal, and for reducing the food intake of an animal. The compositions of the present disclosure may also be useful for treating or preventing obesity in an animal. The compositions of the present disclosure may also be useful for the manufacture of pet foods, specifically, dog or cat foods.

All percentages expressed herein are on a weight by dry matter basis unless specifically stated otherwise.

This invention is not limited to the particular methodology, protocols, and reagents described herein because they may vary. Further, the terminology used herein is for the purpose of describing particular embodiments only and is not intended to limit the scope of the present invention. As used herein and in the appended claims, the singular forms "a," "an," and "the" include plural reference unless the context clearly dictates otherwise. Similarly, the words "comprise", "comprises", and "comprising" are to be interpreted inclusively rather than exclusively.

Unless defined otherwise, all technical and scientific terms and any acronyms used herein have the same meanings as commonly understood by one of ordinary skill in the art in the field of the invention. Although any methods and materials similar or equivalent to those described herein can be used in the practice of the present invention, the preferred methods, devices, and materials are described herein.

### EXAMPLES

The invention can be further illustrated by the following examples, although it will be understood that these examples are included merely for purposes of illustration and are not intended to limit the scope of the invention unless otherwise specifically indicated.

### Example 1

This example demonstrates the effect of soluble fiber on food intake in adult cats. Sixty cats (10 per treatment) are allotted 1 of 6 food treatments in a 2 x 3 factorial arrangement as shown in Table 1: 0.5%, 1.0%, or 2.0% added soluble fiber in combination with 14% total fiber or 1.0%, 2.0%, or 4.0% added soluble fiber in combination with 24% total fiber. Cats are fed the experimental foods for 7 days to determine daily food intake. The results are shown in Table 2.

Referring to Table 2, adding soluble fiber to food containing 14% total fiber reduces average daily food intake (ADFI) in adult cats. ADFI is not decreased by the addition of 1% or more soluble fiber to food containing 24% total fiber.

**Table 1**

| Cat Food Composition* | | | | | | | |
|---|---|---|---|---|---|---|---|
| Total Dietary Fiber | 14% | | | | 24% (comparative) | | |
| Soluble Fiber** | 0.5% | 1.0% | 2.0% | | 1.0% | 2.0% | 4.0% |
| Ingredient | | | | Ingredient | | | |
| Brewers Rice | 34 | 31.77 | 29.66 | Poultry Meal | 27.79 | 26.23 | 23.64 |
| Corn Gluten Meal | 24 | 21.83 | 23.77 | Corn | 24.58 | 23.65 | 21.79 |
| Low Ash Poultry Meal | 21.13 | 23.20 | 22.55 | Corn Gluten Meal | 19.49 | 20.55 | 22.11 |
| Cellulose | 8.02 | 6.64 | 4.04 | Cellulose | 17.49 | 14.57 | 8.8 |
| Corn | 3.4 | 3.4 | 3.4 | Beet Pulp | 2.95 | 7.3 | 15.96 |
| Grease | 1.675 | 3 | 2.57 | Water | 1.5 | 1.5 | 1.5 |
| Water | 1.5 | 1.5 | 1 | Pal Enhancer A | 1.5 | 1.5 | 1.5 |
| Soybean Mill Run | 1.5 | 1.5 | 1.5 | Soybean Oil | 1.45 | 1.45 | 1.45 |
| Pal Enhancer A | 1.2 | 1.2 | 1.2 | Potassium Chloride | 0.726 | 0.722 | 0.710 |
| Choline Chloride | 0.8 | 0.8 | 0.8 | Calcium Sulfate | 0.65 | 0.65 | 0.65 |
| Potassium Chloride | 0.681 | 0.7 | 0.713 | Pal Enhancer B | 0.5 | 0.5 | 0.5 |
| Pal Enhancer B | 0.5 | 0.5 | 0.5 | Choline Chloride | 0.44 | 0.44 | 0.44 |
| L-Carnitine | 0.45 | 0.45 | 0.45 | L-Carnitine | 0.44 | 0.44 | 0.44 |
| Calcium Sulfate | 0.4 | 0.4 | 0.4 | Glycerol | 0.2 | 0.2 | 0.2 |
| Salt | 0.25 | 0.25 | 0.25 | Taurine | 0.1 | 0.1 | 0.1 |
| Vitamin E | 0.2 | 0.2 | 0.2 | Preservative A | 0.07 | 0.07 | 0.07 |
| Vitamin Premix | 0.126 | 0.126 | 0.126 | Vitamin Premix | 0.067 | 0.067 | 0.067 |
| Taurine | 0.1 | 0.1 | 0.1 | Trace Mineral Premix | 0.04 | 0.04 | 0.04 |
| Trace Mineral Premix | 0.05 | 0.05 | 0.05 | Preservative B | 0.01 | 0.04 | 0,01 |
| Beet Pulp | 0 | 2.38 | 6.71 | | | | |
| | | | | | | | |

| Analyzed Results | | | | Analyzed Results | | | |
|---|---|---|---|---|---|---|---|
| Moisture | 8.77 | 5.31 | 3.45 | Moisture | 4.31 | 4.35 | 4.56 |
| Protein | 33.2 | 35.29 | 37.37 | Protein | 36.48 | 36.5 | 35.68 |
| Fat | 7.3 | 8.17 | 8.43 | Fat | 8.2 | 8.22 | 7.87 |
| Ash | 4.74 | 5.34 | 5.75 | Ash | 5.85 | 5.86 | 6.25 |
| Calcium | 0.87 | 1.01 | 1.06 | Calcium | 1.11 | 1.12 | 1.11 |
| Phosphorus | 0.76 | 0.83 | 0.85 | Phosphorus | 0.82 | 0.83 | 0.78 |
| Magnesium | 0.066 | 0.07 | 0.084 | Magnesium | 0.083 | 0.099 | 0.12 |
| Potassium | 0.65 | 0.7 | 0.72 | Potassium | 0.75 | 0.76 | 0.76 |
| Sodium | 0.31 | 0.33 | 0.34 | Sodium | 0.23 | 0.24 | 0.23 |
| Chloride | 0.71 | 0.75 | 0.77 | Chloride | 0.61 | 0.62 | 0.62 |
| Crude Fiber | 6.4 | 6.5 | 5.6 | Crude Fiber | 13.5 | 12.7 | 10.5 |
| Insoluble Fiber | 12.1 | 12.2 | 12.1 | Insoluble Fiber | 23.2 | 22.2 | 20.8 |
| Soluble Fiber** | 0.6 | 0.3 | 2.3 | Soluble Fiber** | 1.6 | 2.2 | 3.7 |
| Total Dietary Fiber | 12.7 | 12.5 | 14.4 | Total Dietary Fiber | 24.8 | 24.4 | 24.5 |

| | | | | | | | |
|---|---|---|---|---|---|---|---|
| * Ingredients are As-Mixed, Nutrients are As-Fed ** Soluble fiber in top line is food as intended to be formulated, and in table as analyzed. | | | | | | | |

**Table 2**

| Effect of Soluble Fiber Food Intake in Adult Cats | | | | | | |
|---|---|---|---|---|---|---|
| Total Dietary Fiber. % | 14% | | | 24% (comparative) | | |
| Soluble Fiber, % | 0.5 | 1.0 | 2.0 | 1.0 | 2.0 | 4.0 |
| ADFI, g/day | 61.4 | 51.2 | 46.2 | 41.4 | 45.6 | 46.1 |

### Example 2

This example demonstrates the effect of soluble fiber on ad libitum food intake in adult cats. Twenty-one cats (7 per treatment) are allotted 1 of 3 food treatments: 0.5%. 1.0%, or 2.0% added soluble fiber in combination with 14% total dietary fiber (as shown in Table 1). Cats are fed the experimental foods for 30 days to determine if the food composition reduced daily food intake. The average daily food intake is averaged for days 0-7, 7-14, 14-21, and 21-30 of the study. The results are shown in Table 3.

Referring to Table 3. the results indicate that voluntary food intake is reduced in cats by adding soluble fiber to the diet. Numbers are presented as average daily food intake (grams per day).

**Table 3**

| Effects of Soluble Fiber on Food Intake in Adult Cats (g/day) | | | | |
|---|---|---|---|---|
| | Day 0 - 7 | Days 7 - 14 | Days 14 - 21 | Days 21 - 30 |
| 0.5% Soluble Fiber | 55.5 | 72.6 | 80.3 | 80.1 |
| 1.0% Soluble Fiber | 50.2 | 68.7 | 85.5 | 84.0 |
| 2.0% Soluble Fiber | 48.7 | 66.9 | 74.3 | 70.1 |

### Example 3

This example demonstrates the effect of soluble fiber on food intake in adult dogs. Thirty dogs (10 per treatment) are allotted 1 of 3 food treatments: 0.5%, 1.0%, or 2.0% added soluble fiber in combination with 12% total fiber, as shown in Table 4. Dogs are fed the experimental foods for 7 days to determine daily food intake. The results are shown in Table 5.

Referring to Table 5. the results indicate that voluntary food intake is reduced in dogs by adding soluble fiber to the diet.

**Table 4**

| Dog Food Composition* | | | |
|---|---|---|---|
| Soluble Fiber** | 0.5% | 1.0% | 2.0% |
| Moisture | 6.1 | 8.14 | 7.63 |
| Protein | 18.77 | 18.32 | 17.95 |
| Fat | 14.44 | 13.89 | 14 |
| Ash | 4.49 | 4.24 | 4.52 |
| Calcium | 0.72 | 0.64 | 0.69 |
| Phosphorus | 0.6 | 0.55 | 0.56 |
| Magnesium | 0.1 | 0.11 | 0.12 |
| Potassium | 0.75 | 0.69 | 0.69 |
| Sodium | 0.19 | 0.17 | 0.18 |
| Chloride | 0.65 | 0.52 | 0.62 |
| Crude Fiber | 6.2 | 3.6 | 3.5 |
| Insoluble Fiber | 11.4 | 10.4 | 10.3 |
| Soluble Fiber** | 1.1 | 1 | 1.7 |
| Total Dietary Fiber | 12.5 | 11.4 | 12 |

| | | | |
|---|---|---|---|
| * On an As-Fed Basis. ** Soluble fiber in top line is food as intended to be formulated, and in table as analyzed. | | | |

**Table 5**

| Effect of Soluble Fiber Food Intake in Adult Dogs | | | |
|---|---|---|---|
| Total Dietary Fiber, % | 12 | | |
| Soluble Fiber, % | 0.5 | 1.0 | 2.0 |
| ADFI, g/day | 258 | 201 | 176 |

In the specification, there are disclosed typical preferred embodiments of the invention and, although specific terms are employed, they are used in a generic and descriptive sense only and not for purposes of limitation, the scope of the invention being set forth in the following claims.

**Table 5**

| Effect of Soluble Fiber Food Intake in Adult Dogs | | | |
|---|---|---|---|
| Total Dietary Fiber, % | 12 | | |
| Soluble Fiber, % | 0.5 | 1.0 | 2.0 |
| ADFI, g/day | 258 | 201 | 176 |
| | | | |

In the specification, there are disclosed typical preferred embodiments of the invention and, although specific terms are employed, they are used in a generic and descriptive sense only and not for purposes of limitation, the scope of the invention being set forth in the following claims.

## Claims

1. Soluble fiber for use in reducing food intake by an animal or controlling the weight of an animal wherein the soluble fiber is present in a food composition comprising:
(a) at least 0.3% of the soluble fiber and from 1% to 20% dietary insoluble fiber; and
(b) at least one of the following:
(i) from 5% to 70% protein, and
(ii) from 2% to 50% fat, and optionally further comprising no greater than 50% carbohydrate.

2. The soluble fibre for use according to claim 1 wherein the food composition comprises a source of soluble fiber selected from beet pulp, guar gum, chicory root, psyllium, pectin, blueberry, cranberry, squash, apples, oats, beans, citrus, barley and peas.

3. The soluble fibre for use according to claim 1 or claim 2, wherein the soluble fiber comprises from 0.3% to 7%, from 0.5% to 6% or at least 1% by weight of the food composition on a dry matter basis.

4. The soluble fibre for use according to any preceding claim wherein the food composition is nutritionally and/or organoleptically adapted for consumption by an animal of the order Carnivora, preferably a feline or canine.

5. The soluble fibre for use according to any preceding claim wherein the food composition comprises from 5% to 45% carbohydrate.

6. The soluble fibre for use according to any preceding claim wherein the food composition comprises from 1% to 5.5% dietary insoluble fiber.

7. The soluble fibre for use according to any preceding claim wherein the food composition comprises no greater than 15% of one or more nutritional balancing agents.

8. The soluble fibre for use according to any preceding claim wherein the food composition is a dog or cat food, and preferably wherein the food is a food supplement, a treat, or a toy.

## Patentansprüche

1. Lösliche Faser zur Verwendung beim Verringern von Nahrungsaufnahme durch ein Tier oder beim Kontrollieren des Gewichts eines Tieres, wobei die lösliche Faser in einer Nahrungszusammensetzung vorhanden ist, umfassend:
(a) mindestens 0,3% der löslichen Faser und von 1% bis 20% unlösliche Nahrungsfaser; und
(b) mindestens eines der Folgenden:
(i) von 5% bis 70% Protein, und
(ii) von 2% bis 50% Fett, und gegebenenfalls weiterhin umfassend nicht mehr als 50% Kohlenhydrat.

2. Lösliche Faser zur Verwendung nach Anspruch 1, wobei die Nahrungszusammensetzung eine Quelle an löslicher Faser umfasst, die aus Rübenschnitzeln, Guargummi, Chicorée-Wurzel, Psyllium, Pektin, Blaubeere, Kranbeere, Kürbis, Äpfeln, Hafer, Bohnen, Zitrus, Gerste und Erbsen ausgewählt sind.

3. Lösliche Faser zur Verwendung nach Anspruch 1 oder 2, wobei die lösliche Faser von 0,3% bis 7%, von 0,5% bis 6% oder mindestens 1% bezogen auf das Gewicht der Nahrungszusammensetzung auf einer Trockenmassebasis umfasst.

4. Lösliche Faser zur Verwendung nach einem beliebigen voranstehenden Anspruch, wobei die Nahrungszusammensetzung vom Nährwert und/oder organoleptisch an den Verzehr durch ein Tier der Ordnung Carnivora angepasst ist, bevorzugt eine Katze oder einen Hund.

5. Lösliche Faser zur Verwendung nach einem beliebigen voranstehenden Anspruch, wobei die Nahrungszusammensetzung von 5% bis 45% Kohlenhydrat umfasst.

6. Lösliche Faser zur Verwendung nach einem beliebigen voranstehenden Anspruch, wobei die Nahrungszusammensetzung von 1% bis 5,5% unlösliche Nahrungsfaser umfasst.

7. Lösliche Faser zur Verwendung nach einem beliebigen voranstehenden Anspruch, wobei die Nahrungszusammensetzung nicht mehr als 15% von einem oder mehreren Nährstoffausgleichsmitteln umfasst.

8. Lösliche Faser zur Verwendung nach einem beliebigen voranstehenden Anspruch, wobei die Nahrungszusammensetzung ein Hunde- oder Katzenfutter ist, und bevorzugt wobei die Nahrung ein Nahrungsergänzungsmittel, eine Belohnung oder ein Spielzeug ist.

## Revendications

1. Fibre soluble pour une utilisation dans la réduction de la consommation alimentaire par un animal ou le contrôle du poids d'un animal dans laquelle la fibre soluble est présente dans une composition alimentaire comprenant :
(a) au moins 0,3 % de la fibre soluble et de 1 % à 20 % de fibres alimentaires insolubles ; et
(b) au moins l'un des éléments suivants :
(i) de 5 % à 70 % de protéine, et
(ii) de 2 % à 50 % de matière grasse, et comprenant éventuellement en outre pas plus de 50 % de glucides.

2. Fibre soluble pour une utilisation selon la revendication 1, dans laquelle la composition alimentaire comprend une source de fibre soluble choisie parmi la pulpe de betterave, la gomme guar, la racine de chicorée, le psyllium, la pectine, la myrtille, la canneberge, la courge, les pommes, l'avoine, les haricots, les agrumes, l'orge et les pois.

3. Fibre soluble pour une utilisation selon la revendication 1 ou la revendication 2, dans laquelle la fibre soluble constitue de 0,3 % à 7 %, de 0,5 % à 6 % ou au moins 1 % en poids de la composition alimentaire sur la matière sèche.

4. Fibre soluble pour une utilisation selon l'une quelconque des revendications précédentes, dans laquelle la composition alimentaire est adaptée au plan nutritionnel et/ou au plan organoleptique pour la consommation par un animal de l'ordre Carnivora, de préférence un félin ou un canin.

5. Fibre soluble pour une utilisation selon l'une quelconque des revendications précédentes, dans laquelle la composition alimentaire comprend de 5 % à 45 % de glucide.

6. Fibre soluble pour une utilisation selon l'une quelconque des revendications précédentes, dans laquelle la composition alimentaire comprend de 1 % à 5,5 % de fibres alimentaires insolubles.

7. Fibre soluble pour une utilisation selon l'une quelconque des revendications précédentes, dans laquelle la composition alimentaire ne comprend pas plus de 15 % d'un ou de plusieurs agents d'équilibrage nutritionnel.

8. Fibre soluble pour une utilisation selon l'une quelconque des revendications précédentes, dans laquelle la composition alimentaire est un aliment pour chien ou chat, et de préférence dans laquelle l'aliment est un complément alimentaire, un traitement ou un jouet.
